# EUROPEAN PATENT APPLICATION

(11) **EP 2 708 973 A1**
(43) Date of publication of application: **19.03.2014**
(21) Application number: 12184571.3
(22) Date of filing: 14.09.2012
(51) Int. Cl.: G06F 1/16, G06F 1/26, H04M 1/04

(54) **Multi-orientation stand for a portable electronic device**

(71) Applicant: BlackBerry Limited, Waterloo, ON N2K 0A7 (CA)
(72) Inventor: Szymanski, Aaron Michael, Mississauga, Ontario, L4W OB5 (CA); Paschke, Brian Dennis, Mississagua, Ontario, L4W 05B (CA)
(74) Representative: Roberts, Gwilym Vaughan

(57) **Abstract**

A multi-orientation stand system for a portable electronic device, the multi-orientation stand including portable electronic device and a first surface disposed in contact with the portable electronic device for supporting the portable electronic device in a plurality of orientations. Also included is at least one charging feature disposed proximate the first surface for routing power to a power storing component of the portable electronic device upon contact between the first surface and the portable electronic device.

## Description

### FIELD OF TECHNOLOGY

The present disclosure relates to stands for portable electronic devices that may support the portable electronic device in a plurality of substantially spaced relations to a generally horizontal surface, such as a display or docking stand for charging a battery of a portable electronic device.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), tablet computers, and laptop computers with wireless 802.11 or Bluetooth capabilities.

Stands, such as docking stations or stands are commonly utilized to provide a convenient receptacle for an electronic device while coupling to a power source for charging a battery ofthe portable electronic device. Such stands may also provide an interface for data transfer between the portable electronic devices and, for example, a computer.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 is a block diagram of an example of a portable electronic device;

Figure 2 is a rear elevational view of the portable electronic device;

Figure 3 is a perspective view of a multi-orientation stand system for the portable electronic device;

Figure 4 is a perspective view of the multi-orientation stand system supporting the portable electronic device in accordance with one aspect ofthe invention;

Figure 5 is a side, cross-sectional view of the multi-orientation stand system in accordance with another aspect of the invention;

Figure 6 is a side, cross-sectional view of the multi-orientation stand system in accordance with yet another aspect of the invention; and

Figure 7 is a side, partial cross-sectional view of the multi-orientation stand system in accordance with still yet another aspect ofthe invention.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Some portable electronic devices, such as smart telephones and tablet computers, may be handheld for ease of use and portability. That is, handheld devices are sized and shaped to be held or carried in a human hand and may be used while held. Many portable electronic devices include orientation sensing devices, such as an accelerometer to detect an orientation of the device and display information in a corresponding orientation. Portable electronic devices are commonly used in an orientation that is dependent on the application running on the device. Further, individual users may prefer to use a portable electronic device in one orientation for one purpose and in a different orientation for a different purpose. A stand that facilitates movement of the portable electronic device into different orientations is desirable to improve ease of use of the portable electronic device for ease of display to the user, during charging and/or during data transfer.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope ofthe examples described herein. Words such as "substantial" or "generally," as used herein, are intended to be descriptive but to avoid strict application or strict mathematical definition. To illustrate: two surfaces that are "substantially parallel" may be strictly parallel or approximately parallel; a shape that is "substantially a parallelogram" may be approximately a parallelogram, although it may not be exactly a parallelogram and although it may have rounded corners, for example; and "generally perpendicularly" includes but is not limited to precisely perpendicularly. The absence of any words that expressly avoid strict application or definition (in the detailed description and in the claims), however, does not necessarily mean that strictness is intended. The stand described herein may be utilized with a variety of portable electronic devices including various components. In some embodiments, for example, the stand may include electrical components or moving parts, and may perform functions in addition to serving as a stand. In other embodiments, however, the stand may do little other than serve as a stand, that is, it may support a portable electronic device in a plurality of substantially spaced relations to a generally horizontal surface such as a table, but have little or no additional functionality.

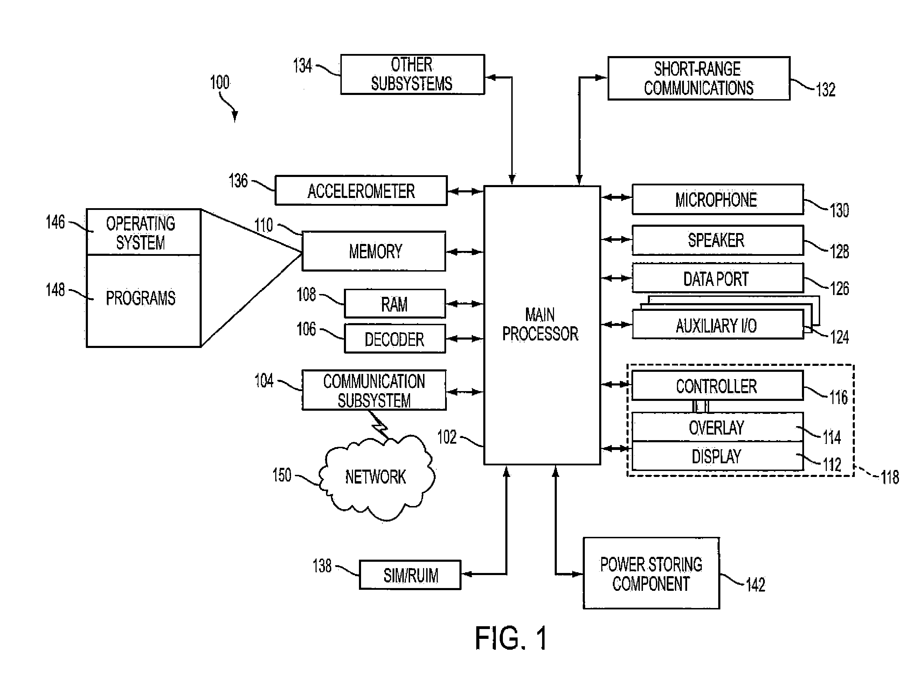

A block diagram of an example of a portable electronic device 100 is shown in FIG. 1. The portable electronic device 100 includes multiple components, such as a processor 102 that controls the overall operation of the portable electronic device 100. Examples of portable electronic devices include mobile, or handheld, wireless communication devices such as pagers, cellular phones, cellular smartphones, wireless organizers, personal digital assistants, wirelessly enabled notebook computers, tablet computers, mobile internet devices, electronic navigation devices, or portable speakers. The portable electronic device may also be a device without wireless communication capabilities, such as a handheld electronic game, digital photograph album, digital camera, media player, or e-book reader.

Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power storing component 142, functioning as a power source for the portable electronic device 100, such as one or more rechargeable batteries, powers the portable electronic device 100. The portable electronic device 100 may also include charging circuitry (not shown), such as an inductive coil and a power controller, that may enable the power storing component 142 to be recharged wirelessly or through a physical electrical connection or both. As will be discussed below, some embodiments of a stand may be used to deliver power to or recharge a battery in the portable electronic device 100.

The processor 102 interacts with other components, such as a Random Access Memory (RAM) 108, memory 110, a touch-sensitive display 118, one or more actuators, one or more force sensors, an auxiliary input/output (I/O) subsystem 124, a data port 126, a speaker 128, a microphone 130, short-range communications 132 and other device subsystems 134. The touch-sensitive display 118 includes a display 112 and an overlay 114 comprising one or more touch sensors that are coupled to at least one controller 116 that is utilized to interact with the processor 102, Input via a graphical user interface is typically provided via the touch-sensitive display 118. Information, such as text, characters, symbols, images, icons, and other items that may be displayed or rendered on the portable electronic device 100, is displayed on the touch-sensitive display 118 via the processor 102. The processor 102 may also interact with an orientation sensor, such as an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be a capacitive touch-sensitive display that includes one or more capacitive touch sensors that the overlay 114 comprises. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

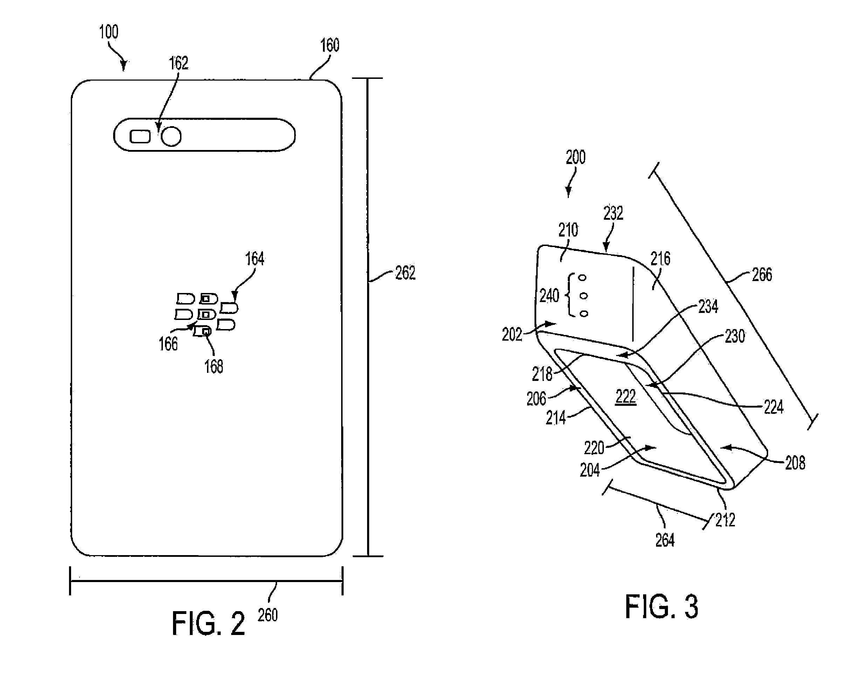

Referring now to Figure 2, the portable electronic device 100 includes a rear surface 160 that may comprise one or more features disposed on the rear surface 160 and/or recessed within the rear surface 160. Such features may include a digital camera arrangement 162 and a graphical element 164, which may comprise a logo, a registered trademark or any text, symbol or combination thereof that is associated with the portable electronic device 100. Regardless of the features disposed on or recessed within the rear surface 160, at least one, but typically a plurality of electrical connectors 166 are integrated proximate the rear surface 160. As with the other features of the rear surface 160, it is contemplated that the plurality of electrical connectors 166 extend outwardly away from the rear surface 160 in the form of protrusions. Alternatively, the plurality of electrical connectors 166 may be integrated as recessed regions within the rear surface 160. It is further contemplated that the plurality of electrical connectors 166 comprise a combination of protrusions and recesses. In yet another embodiment, the plurality of electrical connectors 166 may form a flush overall surface with the rear surface 160. Furthermore, the plurality of electrical connectors 166 may be arranged in numerous alignments, such as a relatively vertically aligned arrangement, however, it is to be appreciated that the plurality of electrical connectors 166 may be aligned in a relatively horizontal arrangement, an angled arrangement, a non-linear arrangement and/or a clustered arrangement. The preceding list of arrangements is merely illustrative of exemplary embodiments and is not intended to be limiting of the particular arrangement of the plurality of electrical connectors 166.

At least one of the plurality of electrical connectors 166 is formed of a magnetic material. Each of the plurality of electrical connectors 166 includes an outer portion 168, which is typically visible from an exterior location of the rear surface 160, as illustrated, where the outer portion 168 is accessible from an exterior location of the rear surface 160. Each of the plurality of electrical connectors 166 also includes an inner portion, which communicates with internal components of the portable electronic device 100, such as the power storing component 142, for example. The communication between the inner portion of each of the plurality of electrical connectors 166 and the power storing component 142 occurs through discrete contacts, selective plating, printed circuit boards (PCBs), wires or any other suitable manner of communication recognized in the art.

Although it is contemplated that the plurality of electrical connectors 166 may be disposed at various locations proximate the rear surface 160, in the exemplary embodiment shown, the plurality of electrical connectors 166 are disposed within the graphical element 164.

Referring now to Figure 3, a multi-orientation stand 200 is shown. The multi-orientation stand 200 includes a first or top region 202 and a second or bottom region 204 oppositely disposed from the top region 202. The top region 202 and the bottom region 204 are joined by a first side region 206 and a second side region 208 integrally formed with, and extending between, the top region 202 and the bottom region 204. Each of the top region 202, the bottom region 204, the first side region 206 and the second side region 208 include an outer surface, referred to herein as a first surface 210, a second surface 212, a third surface 214 and a fourth surface 216, respectively. Additionally, each of the top region 202, the bottom region 204, the first side region 206 and the second side region 208 include an inner surface, referred to herein as a fifth surface 218, a sixth surface 220, a seventh surface 222 and an eighth surface 224, respectively. In combination, the fifth surface 218, the sixth surface 220, the seventh surface 222 and the eighth surface 224 define a cavity 230 therebetween that extends through the multi-orientation stand 200. Although the cavity 230 is described above and illustrated as extending through the multi-orientation stand 200, it is contemplated that the cavity 230 may simply be a recess within the multi-orientation stand 200.

Any of the surfaces described above in conjunction with the multi-orientation stand 200 may be disposed at numerous angles configured to provide a variety of support orientations for the portable electronic device 100, as will be described in detail below. It is to be understood that the surfaces, particularly the first surface 210 and the second surface 212 may be relatively flat or may include varying degrees of curvature. As illustrated, and in an exemplary embodiment, the first surface 210 and the second surface 212 are relatively flat and formed at an incline or angle 250 relative to a rear face 232 of the multi-orientation stand 200. For example, the first surface 210 and the second surface of the top region 202 each angularly extend along a planar path from the rear face 232 of the multi-orientation stand 200 to a front face 234 of the multi-orientation stand 200. The precise angle of the first surface 210 may vary, but is typically an acute angle and is generally shown at an angle between 10° and 80° relative to the rear face 232, and in the embodiment shown, generally about 45°. At least one, but typically a plurality of charging features 240 are disposed proximate the first surface 210. Similar to the plurality of electrical connectors 166 of the rear surface 160 of the portable electronic device 100, it is contemplated that the plurality of charging features 240 extend outwardly away from the first surface 210 in the form of protrusions or are integrated as recessed regions within the first surface 210. It is further contemplated that the plurality of charging features 240 comprise a combination of protrusions and recesses. Furthermore, the plurality of charging features 240 may be arranged in numerous alignments, such as the relatively linear alignment shown. However, it is to be appreciated that the plurality of charging features 240 may be aligned in a relatively angled arrangement, a non-linear arrangement and/or a clustered arrangement. The preceding list of arrangements is merely illustrative of exemplary embodiments and is not intended to be limiting of the particular arrangement of the plurality of charging features 240.

Irrespective of the precise configuration of the plurality of charging features 240, a corresponding relationship is established between the plurality of charging features 240 and the plurality of electrical connectors 166, such that engagement of the portable electronic device 100 and the multi-orientation stand 200 is facilitated. For example, and as illustrated, the plurality of charging features 240 and the plurality of electrical connectors 166 may be arranged in a relatively linear alignment, such that engagement of the portable electronic device 100 and the multi-orientation stand 200 provide a plurality of desirable orientations in which the portable electronic device 100 is situated in during engagement to the multi-orientation stand 200. To ensure proper alignment and orientation between the portable electronic device 100 and the multi-orientation stand 200, at least a portion of the plurality of charging features 240 are formed of a magnetic material, as is the case with the plurality of electrical connectors 166, as described in detail above.

Engagement between the multi-orientation stand 200 and the portable electronic device 100 is facilitated by a magnetic attraction of the plurality of electrical connectors 166 and the plurality of charging features 240. The magnetic material forming the plurality of electrical connectors 166 and the plurality of charging features 240 facilitate an electrical connection between the multi-orientation stand 200 and the portable electronic device 100, while maintaining a structural connection in the precise orientation that is desired by a user, i.e., "portrait" or "landscape," as described below. The strength of the magnetic attraction depends on the particular application of use, with factors such as the weight and geometry ofthe portable electronic device 100 influencing the required magnetic attraction. Generally, the magnetic attraction is greater than the gravitational force of the portable electronic device at the center of gravity of the portable electronic device 100, thereby ensuring maintenance of the center of gravity of the portable electronic device 100 within a portable electronic device perimeter. Magnetic attachment between the portable electronic device 100 and the multi-orientation stand 200 facilitates a readily available attachment and detachment capability that advantageously reduces cumbersome procedures associated with inserting components within mating receptacles. Such an attachment provides greater adaptability of the multi-orientation stand 200 to engage a wide variety of portable electronic devices.

Referring again to Figure 2, with continued reference to Figure 3, the portable electronic device 100 includes a portable electronic device width 260 and a portable electronic device height 262, with the outer surfaces of the portable electronic device 100 comprising a portable electronic device perimeter (not labeled). Similarly, the multi-orientation stand 200 includes a multi-orientation width 264 and a multi-orientation height 266. The outer portions of the first surface 210, the second surface 212, the third surface 214 and the fourth surface 216 form a multi-orientation stand perimeter. Each dimension associated with the portable electronic device 100 noted above is greater than each dimension associated with the multi-orientation stand 200. Specifically, the portable electronic device width 260 is greater than the multi-orientation stand width 264, the portable electronic device height 262 is greater than the multi-orientation stand height 266, and the portable electronic device perimeter is greater than the multi-orientation stand perimeter. As will be appreciated in the description below, while the portable electronic device 100 is supported by the multi-orientation stand 200, regardless of orientation of the portable electronic device 100, when viewed from the front by a user, no portion of the multi-orientation stand 200 is visible, as the outer-most portions of the multi-orientation stand 200 extend only to inwardly located regions of the portable electronic device perimeter. The reduced dimensions of the multi-orientation stand 200, relative to the portable electronic device 100, provide ease of portability of the multi-orientation stand 200. The multi-orientation stand 200 may be transported within small areas, such as clothing pockets of a user, for example, thereby decreasing undesirable aspects of traveling with charging devices.

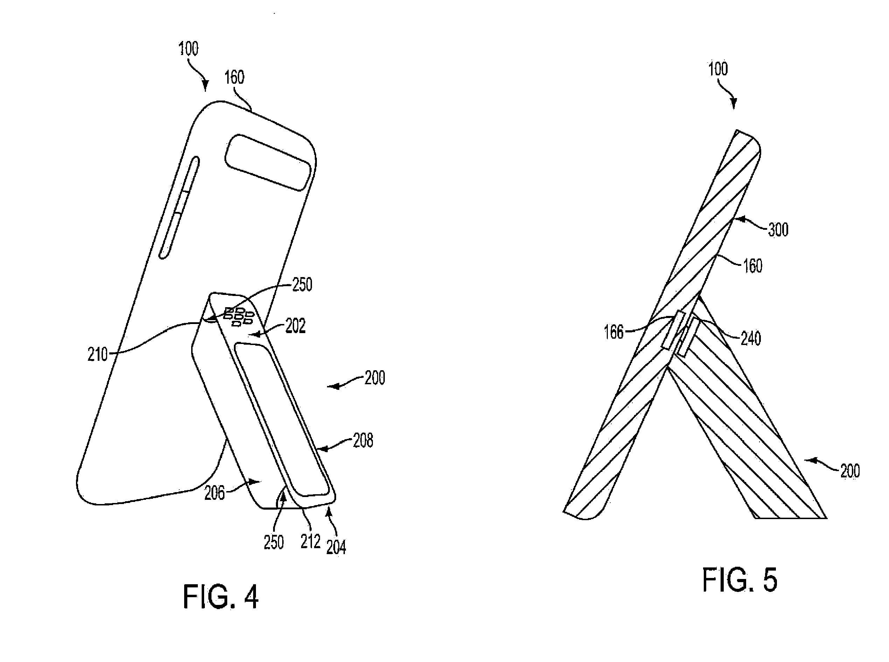

Referring now to Figures 4 and 5, the multi-orientation stand 200 is illustrated in a supporting relationship with the portable electronic device 100. In the illustrated embodiment, the bottom region 204 is shown in contact and resting upon a relatively planar or horizontal surface, however, it is to be appreciated that any region, including the top region 202, the first side region 206 or the second side region 208 may be in contact with the horizontal surface. Also in the illustrated embodiment, the first surface 210 of the top region 202 is engaged and supports the portable electronic device 100, and more specifically the rear surface 160 of the portable electronic device 100. It is to be appreciated that engagement between the portable electronic device 100 and the multi-orientation stand 200 may be facilitated by any of the other surfaces of the multi-orientation stand 200. As described above, the first surface 210 includes the plurality of charging features 240 for engaging the plurality of electrical connectors 166, however, any of the other surfaces of the multi-orientation stand 200 may include such charging features.

Upon engagement, the multi-orientation stand 200 may provide support to position the portable electronic device 100 in a desirable orientation. However, an exemplary embodiment comprising the plurality of charging features 240 provides an electrical connection between the multi-orientation stand 200 and the portable electronic device 100. The invention provides that the multi-orientation stand 200 acts as an interchangeable element between the charging source and the portable electronic device 100. Therefore, the multi-orientation stand 200 provides structural rigidity to the portable electronic device 100, while still facilitating a charge. Such an electrical connection is advantageous if the multi-orientation stand 200 is in operable communication with a power source or if a multi-orientation stand power storing component (not illustrated) is disposed in the multi-orientation stand 200. Either configuration provides routing of power to the portable electronic device 100, and more specifically to the power storing component 142 disposed therein. It is to be appreciated that a direct physical connection between the plurality of charging features 240 and the plurality of electrical connectors 166 may facilitate routing of power from the multi-orientation stand 200 to the portable electronic device 100. However, it is contemplated that a wireless connection, such as induction may adequately route power to the power storing component 142.

The multi-orientation stand 200 is configured to support the portable electronic device 100 in a plurality of orientations. A first orientation 300 is illustrated and corresponds to a relatively vertical orientation of the portable electronic device 100. The relatively vertical orientation may be referred to as a "portrait" orientation. As shown and discussed in detail above, the first surface 210 engages the rear surface 160 of the portable electronic device 100, while at least a portion of the bottom region 204 rests upon a horizontal surface. To provide a desired orientation of the portable electronic device 100, the first surface 210 and the bottom region 204, specifically the second surface 212 of the bottom region 204, are formed as inclined, relatively flat surfaces. The angle of the first surface 210 and the second surface 212 determine the angular orientation of the portable electronic device 100. This feature may take the form of various other embodiments by varying the angles to achieve a desired portrait orientation to provide a desired orientation.

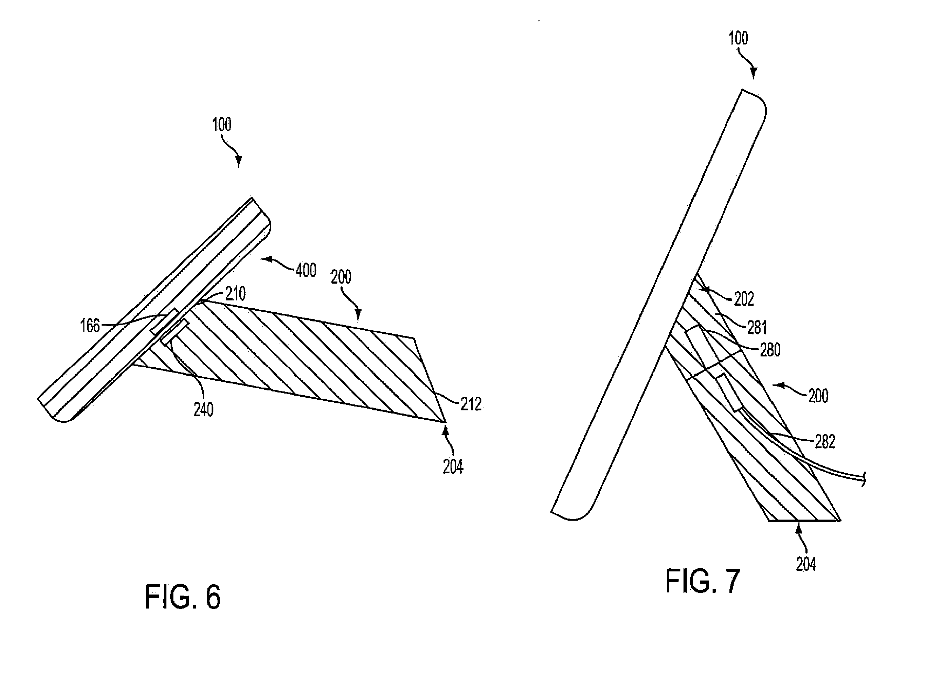

Referring now to Figure 6, a second orientation 400 is illustrated and corresponds to a relatively horizontal orientation of the portable electronic device 100. The relatively horizontal orientation may be referred to as a "landscape" orientation. In the illustrated embodiment, the multi-orientation stand 200 is rotated 180 degrees and the portable electronic device 100 is rotated 90 degrees to transition the portable electronic device 100 from the first orientation 300 to the second orientation 400. The angled surfaces 210, 212 allow the multi-orientation stand 200 to maintain a reliable support of the portable electronic device 100 subsequent to such a transition to the second orientation 400 from the first orientation 300.

As can be appreciated, the described and illustrated embodiments provide numerous alternative orientations that may be achieved by manipulation of the multi-orientation stand 200 and the portable electronic device 100. Additionally, it is contemplated that the geometry of the multi-orientation stand 200 may be modified to provide alternative orientations. It is to be understood that the multi-orientation stand 200 provides a plurality of orientations in which the portable electronic device 100 may be situated. The plurality of orientations allow a user to selectively determine a desirable orientation of the portable electronic device 100, which typically varies from use-to-use of the portable electronic device 100.

Referring now to Figure 7, the multi-orientation stand 200 includes a power source port 280, which is shown as a blind bore, configured to receive a wired power source, such as a power cord 282. In the illustrated embodiment, the power source port 280 is disposed within the top region 202, however it is to be appreciated that the power source port 280 may be disposed within any one of the top region 202, the bottom region 204, the first side region 206 or the second side region 208. Alternatively, the power source port 280 may be disposed in more than one of the regions, which may accommodate more desirable access in particular orientations. The power source port 280 is situated proximate the cavity 230, such that a portion of the power cord 282 rests substantially within the cavity 230. Disposing the power cord 282 within the cavity 230 and extending the power cord 282 to an inner surface of the multi-orientation stand 200 reduces the disturbance to the desired orientation and support of the portable electronic device 100 during a wired connection between the power cord 282 and the multi-orientation stand 200. As explained herein, the power source port 280 is a blind bore within one of the regions 202, 204, 206 and/or 208, and in the exemplary embodiment shown does not extend through the region, forming an intermediate element portion 281 between the bottom of the blind bore and the plurality of charging features 240 within the intermediate element portion 281. One or more electrical connections (not illustrated) extend from the power source port 280 to the plurality of charging features 240, thereby routing power to the externally exposed plurality of charging features 240.

The preceding description describes in one embodiment a multi-orientation stand system for a portable electronic device, the multi-orientation stand including a portable electronic device and a first surface disposed in contact with the portable electronic device for supporting the portable electronic device in a plurality of orientations. Also included is at least one charging feature disposed proximate the first surface for routing power to a power storing component of the portable electronic device upon contact between the first surface and the portable electronic device. Further included is a stand width less than a portable electronic device width. Yet further included is a stand height less than a portable electronic device height.

The preceding description describes in another embodiment a multi-orientation stand system for a portable electronic device including a first portion having means for supporting the portable electronic device in a plurality of orientations. Also included is a second portion, wherein at least a portion of the bottom portion is configured to rest on a relatively horizontal surface. Further included is a means for routing power to a power storing component of the portable electronic device, the means for routing power disposed proximate the means for supporting the portable electronic device in the plurality of orientations. Yet further included is a means for magnetically aligning the multi-orientation stand and the portable electronic device, the means for magnetically aligning disposed proximate the means for supporting the portable electronic device in the plurality of orientations.

The preceding description describes in yet another embodiment a multi-orientation stand system for a portable electronic device, the multi-orientation stand including at least one magnetic charging feature disposed proximate a first surface for routing power to a power storing component of the portable electronic device, the first surface supporting the portable electronic device in a plurality of orientations. Also included is a stand perimeter defined by the first surface, a second surface oppositely disposed from the first surface, a third surface, and a fourth surface oppositely disposed from the third surface, wherein the stand perimeter extends to inwardly located regions relative to a portable electronic device perimeter during orientation of the portable electronic device in any of the plurality of orientations.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A multi-orientation stand system (200) for a portable electronic device comprising:
a portable electronic device (100);
a first surface (210) disposed in contact with the portable electronic device for supporting the portable electronic device in a plurality of orientations;
at least one charging feature (240) disposed proximate the first surface for routing power to a power storing component (142) of the portable electronic device upon contact between the first surface and the portable electronic device;
a stand width (264) less than a width of the portable electronic device (260); and
a stand height (266) less than a height of the portable electronic device (262).

2. The multi-orientation stand system of claim 1, the plurality of orientations comprising a first orientation (300) and a second orientation (400).

3. The multi-orientation stand system of claim 2, wherein the first orientation comprises a relatively vertical orientation and the second orientation comprises a relatively horizontal orientation.

4. The multi-orientation stand system of claim 1, further comprising a first portion (202), a second portion (204), a first side portion (206) and a second side portion (208), wherein the second portion is configured to rest on a relatively horizontal surface, the first surface configured to contact with a rear surface (160) of the portable electronic device.

5. The multi-orientation stand system of claim 4, further comprising a cavity (230) defined by the first portion, the second portion, the first side portion and the second side portion.

6. The multi-orientation stand system of claim 1 or 5, further comprising a power source port (280) disposed within at least one of the first portion, the second portion, the first side portion and the second side portion, the power source port located proximate the cavity.

7. The multi-orientation stand system of claim 1 or 4, the first surface having a magnetic engagement with the portable electronic device for aligning the multi-orientation stand with the portable electronic device.

8. A multi-orientation stand system (200) for a portable electronic device (100) comprising:
a first portion (202) having means for supporting the portable electronic device in a plurality of orientations;
a second portion (204), wherein at least a portion of the second portion is configured to rest on a relatively horizontal surface;
means for routing power to a power storing component (142) of the portable electronic device, the means for routing power disposed proximate the means for supporting the portable electronic device in the plurality of orientations; and
means for magnetically aligning the multi-orientation stand and the portable electronic device, the means for magnetically aligning disposed proximate the means for supporting the portable electronic device in the plurality of orientations.

9. The multi-orientation stand system of claim 8, the means for magnetically connecting configured to provide the means for routing power.

10. The multi-orientation stand system of claim 9, wherein said means for magnetically aligning includes a plurality of electrical connectors (166).

11. The multi-orientation stand system of claim 8, further comprising a cavity (230) defined by the first portion, the second portion, a first side portion (206) and a second side portion (208).

12. The multi-orientation stand system of claim 8 or 11, further comprising a power source port (280) disposed within at least one of the top portion, the bottom portion, the first side portion and the second side portion, the power source port located proximate the cavity, and configured as a blind bore (281).

13. The multi-orientation stand system of claim 8, an outwardly disposed first surface (240) configured to contact a rear surface (160) of the portable electronic device.

14. The multi-orientation stand system of claim 8, further comprising a means for magnetically maintaining a center of gravity of the portable electronic device within a perimeter of the portable electronic device.

15. A multi-orientation stand system (200) for a portable electronic device (100), the multi-orientation stand system comprising:
at least one magnetic charging feature (240) disposed proximate a first surface (210) for routing power to a power storing component (142) of the portable electronic device, the first surface supporting the portable electronic device in a plurality of orientations;
a stand perimeter defined by the first surface, a second surface (212) oppositely disposed from the first surface, a third surface (214), and a fourth surface (216) oppositely disposed from the third surface; and
wherein the stand perimeter extends to inwardly located regions relative to a portable electronic device perimeter during orientation of the portable electronic device in any of the plurality of orientations.
